(19) Europäisches Patentamt
European Patent Office
Office européen des brevets

(11) **EP 4 711 828 A1**

(12) **EUROPEAN PATENT APPLICATION**
published in accordance with Art. 153(4) EPC

(43) Date of publication:
**18.03.2026 Bulletin 2026/12**

(51) International Patent Classification (IPC):
*G02B 5/18* (2006.01)    *G02B 6/00* (2006.01)
*G02B 27/00* (2006.01)

(21) Application number: 24802607.2

(22) Date of filing: **15.03.2024**

(86) International application number:
**PCT/CN2024/081929**

(87) International publication number:
**WO 2024/230319 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.05.2023 CN 202310509381**

(71) Applicant: **Meta-Bounds Inc.**
**Zhuhai, Guangdong 519000 (CN)**

(72) Inventors:
• SHAO, Chendi
Zhuhai, Guangdong 519000 (CN)
• XU, Song
Zhuhai, Guangdong 519000 (CN)
• GUAN, Jian
Zhuhai, Guangdong 519000 (CN)
• ZHOU, Xing
Zhuhai, Guangdong 519000 (CN)

(74) Representative: **Santarelli**
**Tour Trinity**
**1 bis Place de la Défense**
**92400 Courbevoie (FR)**

(54) **DIFFRACTION GRATING, OPTICAL WAVEGUIDE APPARATUS, AND DISPLAY DEVICE**

(57)    A diffraction grating (10), an optical waveguide apparatus including the diffraction grating (10), and a display device. The diffraction grating (10) comprises: a substrate (1); and a plurality of micro-structure units (2), which are formed on the substrate (1) and are periodically arranged at intervals in a first dimension direction ($p_1$) and a second dimension direction ($p_2$). A pattern formed by the orthographic projections of the micro-structure units (2) on the substrate (1) comprises a first closed pattern (21), wherein the first closed pattern (21) is an asymmetric pattern, the boundary of the first closed pattern (21) is formed by sequentially connecting three or more edges in a surrounding manner, and among the three or more edges, there is at least one straight-line edge, which is neither parallel to the first dimension direction ($p_1$) nor to the second dimension direction ($p_2$). Therefore, each micro-structure unit (2) has more adjustable parameters and rich degree of freedom for design, which facilitates the adjustment of coupling-out efficiency.

FIG. 2a

## Description

## Technical Field

The present application belongs to the technical field of optical display, and particularly relates to a diffraction grating, an optical waveguide apparatus and a display device.

## Background of the Invention

In the fields of Augmented reality (AR) and Mixed reality (MR), as compared to display solutions such as Bird Bath (BB, a semi-reflective and semi-transmissive mode), fly-eye (an off-axis reflective mode) and free-form prism, the optical waveguide solution is thinner and lighter with a larger eye box, and thus has broader prospects for application.

In the optical waveguide solution, as compared to the array-type optical waveguide adopting partial transmissive/reflective films, the diffractive optical waveguide is less difficult to produce and prepare and eliminates grid-like dark stripe when implementing two-dimensional pupil expansion, and thus the diffractive optical waveguide has gained more attention. At present, the diffractive optical waveguide mainly includes optical waveguide schemes based on one-dimensional grating and optical waveguide schemes based on two-dimensional grating. As compared to the optical waveguide design scheme based solely on one-dimensional grating, the optical waveguide design scheme based on two-dimensional grating can realize two-dimensional pupil expansion without a turning area, so it can provide a larger eye box and has greater advantages. In the existing optical waveguide based on two-dimensional grating, a two-dimensional diffraction grating is usually composed of a plurality of micro-structure units periodically arranged along the two dimension directions, and the micro-structure units are columnar structures with cross sections in regular shapes such as circles, ellipses, triangles and parallelograms.

In the process of implementing embodiments of the present application, the inventors have found that the two-dimensional diffraction grating in the above related technology has at least the following problems: the micro-structure units have less shape adjustable parameters and low degree of freedom for design, which is not conducive to the adjustment of coupling-out efficiency.

## Summary of the Invention

In order to solve the above problems, the present application provides a diffraction grating, an optical waveguide apparatus and a display device which can increase the degree of freedom for micro-structure design and facilitate the adjustment of coupling-out efficiency.

In order to achieve the above objective, the present application adopts the following technical schemes.

A diffraction grating is provided, which comprises:

a substrate;
a plurality of micro-structure units formed on the substrate and periodically arranged at intervals in a first dimension direction and a second dimension direction, a pattern formed by the orthographic projections of the micro-structure units on the substrate comprises a first closed pattern; wherein the first closed pattern is an asymmetric pattern, the boundary of the first closed pattern is formed by sequentially connecting three or more edges in a surrounding manner, and among the three or more edges, there is at least one straight-line edge, which is neither parallel to the first dimension direction nor to the second dimension direction.

In an optional scheme, the straight-line edge neither parallel to the first dimension direction nor to the second dimension direction is a transformation edge, an included angle formed by the intersection of the transformation edge with the first dimension direction or the second dimension direction and located outside the first closed pattern is a transformation angle $\theta_i$, and the transformation angle $\theta_i$ ranges from 5° to 175°.

In an optional scheme, the transformation edge in the first closed pattern includes at least one of a first-type straight-line edge, a second-type straight-line edge, a third-type straight-line edge and a fourth-type straight-line edge; wherein

a reference parallelogram is set up by taking the maximum ridge width $l_1$ of the first closed pattern in the first dimension direction and the maximum ridge width $l_2$ of the first closed pattern in the second dimension direction as two groups of opposite edges;
a first endpoint of the first-type straight-line edge is located on the vertex of the reference parallelogram, a second endpoint of the first-type straight-line edge is located on one of the edges of the reference parallelogram or on another vertex of the reference parallelogram;
a first endpoint and a second endpoint of the second-type straight-line edge are respectively located on two edges of the reference parallelogram in different directions;
a first endpoint of the third-type straight-line edge is located on one of the edges or on the vertex of the reference parallelogram, and a second endpoint of the third-type straight-line edge is located inside the reference parallelogram;
a first endpoint and a second endpoint of the fourth-type straight-line edge are both located inside the reference parallelogram.

In an optional scheme, the distance $d_{1i}$ between the second endpoint of the first-type straight-line edge located on one of the edges with an edge length of $l_{10}$ and the relatively closer endpoint of the one of the edges is

$$\frac{1}{10} l_{10} \leq d_{1i} \leq \frac{1}{2} l_{10} \; ; \; l_{10}$$ correspondingly takes the value of $l_1$ or $l_2$;

the distance $d_{2i}$ between the first endpoint of the second-type straight-line edge located on one of the edges with an edge length of $l_{20}$ and the relatively closer endpoint of the one of the edges is

$$\frac{1}{10} l_{20} \leq d_{2i} \leq \frac{1}{2} l_{20} \; ;$$ the distance $d_{3i}$ between the second endpoint of the second-type straight-line edge located on another edge with an edge length of $l_{30}$ and the relatively closer endpoint of the another edge is $\frac{1}{10} l_{30} \leq d_{3i} \leq \frac{1}{2} l_{30} \; ; l_{30}$ correspondingly takes the value of $l_2$ when $l_{20}$ correspondingly takes the value of $l_1$, and $l_{30}$ correspondingly takes the value of $l_1$ when $l_{20}$ correspondingly takes the value of $l_2$;

the distance $d_{4i}$ between the first endpoint of the third-type straight-line edge located on one of the edges with an edge length of $l_{40}$ and the relatively closer endpoint of the one of the edges is

$$\frac{1}{10} l_{40} \leq d_{4i} \leq \frac{1}{2} l_{40} \; ;$$ and $l_{40}$ correspondingly takes the value of $l_1$ or $l_2$.

In an optional scheme, the transformation edge in the first closed pattern includes two said third-type straight-line edges, and two second endpoints of the two third-type straight-line edges located inside the reference parallelogram are connected with each other by one or more said fourth-type transformation edges and/or one curved-line edge and/or a straight-line edge parallel to the first dimension direction or the second dimension direction.

In an optional scheme, among the three or more edges, there are at least two or more said transformation edges, and the two or more transformation edges correspond to transformation angles which are not equal to each other.

In an optional scheme, the curved-line edge is wavy curved-line edge with at least one peak or at least one valley.

In an optional scheme, the pattern formed by the orthographic projections of the micro-structure units on the substrate further includes a second closed pattern of an arbitrary shape.

In an optional scheme, in the first dimension direction and the second dimension direction in which the micro-structure units are periodically arranged, in a parallelogram formed by taking two arrangement periods as two groups of opposite edges, the angle of the relatively smaller inner angle is 30° to 85°.

In an optional scheme, both the arrangement period of the micro-structure units in the first dimension direction and the arrangement period of the micro-structure units in the second dimension direction range from 150 nm to 2 μm.

In an optional scheme, the arrangement period of the micro-structure units in the first dimension direction and the arrangement period of the micro-structure units in the second dimension direction are not equal.

In an optional scheme, the diffraction grating is a surface relief grating or a volume holographic grating, and the thickness of the diffraction grating ranges from 10 nm to 2 μm.

In an optional scheme, the diffraction grating comprises at least two optical material components with different optical characteristics, and the optical characteristics include at least one of refractive index, absorption characteristics and birefringence characteristics.

In an optional scheme, for the surface relief grating, the micro-structure unit area is formed at half the grating thickness, the micro-structure unit area in the diffraction grating is provided as a high refractive-index portion, and other areas surrounding the micro-structure unit area are provided as low refractive-index portions; alternatively, the micro-structure unit area in the diffraction grating is provided as a low refractive-index portion, and other areas surrounding the micro-structure unit area are provided as high refractive-index portions; for a volume holographic grating with a refractive index gradient, the micro-structure unit area corresponds to half of the grating thickness, and the micro-structure unit area is the portion surrounded by the contour corresponding to the average refractive index of optical materials.

The present application further provides an optical waveguide apparatus, which comprises:

a base;
the base being provided with at least one of a coupling-in grating, a coupling-out grating and an intermediate grating; wherein
at least one of the coupling-in grating, the coupling-out grating and the intermediate grating adopts the diffraction grating described above in some areas.

In an optional scheme, there are one or more layers of coating on the side of the diffraction grating close to or far from the human eyes, and there are one or more layers of coating on the grating-free side of the base.

Further speaking, the present application further provides a display device, which comprises the optical waveguide apparatus described above.

According to the diffraction grating, the optical waveguide apparatus and the display device provided according to the embodiments of the present application, the micro-structure unit of the two-dimensional diffraction grating is an asymmetric structure, and among the edges constituting the boundary of the micro-structure unit of the two-dimensional diffraction grating, there is at least one straight-line edge which is not parallel to either of the two dimension directions periodically arranged. Consequently, the micro-structure unit has more adjustable parameters and rich degree of freedom for design, thereby facilitating the adjustment of coupling-out efficiency, and improving diffraction selectivity, diffraction efficiency and brightness of images watched by human eyes.

## Brief Description of the Drawings

FIG. 1 is a schematic structural view of a diffraction grating according to one or more embodiments.
FIG. 2a to FIG. 2g show the boundary shape of a micro-structure unit according to one or more embodiments.
FIG. 3a to FIG. 3h show adjustable parameters of a micro-structure unit according to one or more embodiments.
FIG. 4a and FIG. 4b show chamfer diagrams of a micro-structure unit according to one or more embodiments.
FIG. 5 shows the boundary shape of a micro-structure unit according to one or more embodiments.
FIG. 6a to FIG. 6f show schematic cross-sectional structures of a diffraction grating according to one or more embodiments.

## Detailed Description of the Embodiments

In order to make the objectives, technical solutions and advantages of the present application more clear, specific embodiments of the present application will be detailed hereinafter with reference to the attached drawings. Examples of these preferred embodiments are illustrated in the accompanying drawings. The embodiments of the present application shown in the attached drawings and described according to the attached drawings are merely exemplary, and the present application is not limited to these embodiments.

Unless otherwise defined, all technical and scientific terms used herein have the same meaning as commonly understood by those skilled in the art of the present application. The terms used in the specification of the present application are only for the purpose of describing specific embodiments and are not intended to limit the present application.

It shall be noted that, when a component is said to be "disposed on" another component, it may be directly or indirectly disposed on the other component.

It shall be additionally noted that, the same or similar reference numerals in the attached drawings of the embodiments of the present application correspond to the same or similar parts. In the description of the present application, it shall be appreciated that, orientation or positional relationships indicated by terms such as "upper", "lower", "left" and "right" are orientation or positional relationships shown based on the attached drawings, and they are only used for the convenience of describing the present application and simplifying the description, instead of indicating or implying that the devices or elements referred to must have a specific orientation and must be constructed and operated in a specific orientation. Therefore, the terms describing the positional relationships in the attached drawings are only used for illustrative description, and should not be construed as limitations to this patent. Specific meanings of the above terms can be understood by those of ordinary skill in the art based on specific circumstances.

Here, it shall be additionally noted that, in order to avoid obscuring the present application with unnecessary details, only the structures and/or processing steps closely related to the scheme according to the present application are shown in the attached drawings, and other details that are less related to the present application are omitted.

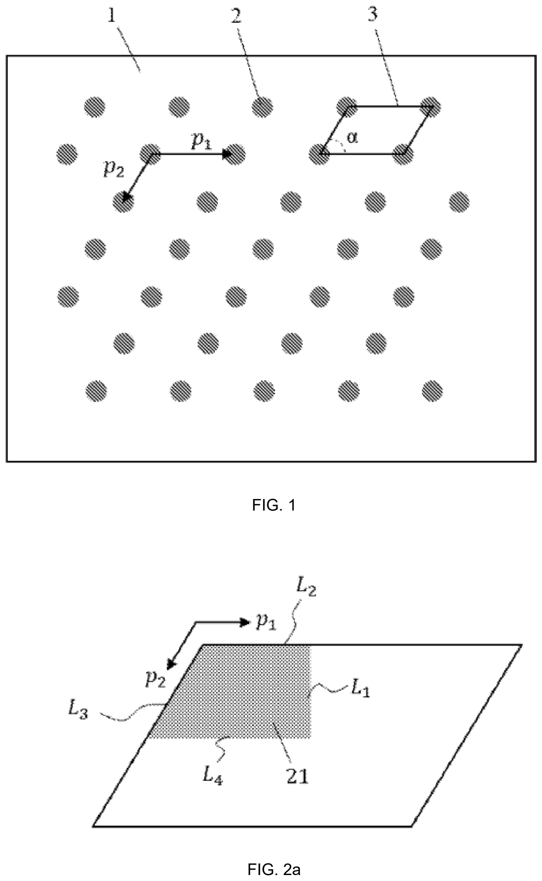

An embodiment of the present application first provides a diffraction grating. As shown in FIG. 1, the diffraction grating 10 comprises a substrate 1 and a plurality of micro-structure units 2 formed on the substrate 1 and periodically arranged in a first dimension direction $p_1$ and a second dimension direction $p_2$. The micro-structure units 2 have an arrangement period $|p_1|$ in the first dimension direction $p_1$, and the micro-structure units 2 have an arrangement period $|p_2|$ in the second dimension direction $p_2$. It shall be noted that, the micro-structure units 2 are shown as dots in FIG. 1 only to illustrate the array arrangement structure of the micro-structure units 2 on the substrate 1, and it does not mean that the micro-structure units 2 are circular in shape.

In one or more embodiments, referring to FIG. 1, in the first dimension direction $p_1$ and the second dimension direction $p_2$ in which the micro-structure units 2 are periodically arranged at intervals, in a parallelogram 3 formed by taking two arrangement periods as two groups of opposite sides, the angle of the relatively smaller inner angle $\alpha$ is 30° to 85°. This parallelogram 3 is a repeating unit with the smallest area and the smallest edge length, so it is defined as a grating unit, and the angle of the relatively smaller inner angle in the repeating grating units is 30° to 85°.

In one or more embodiments, referring to FIG. 1, the arrangement period $|p_1|$ in the first dimension direction $p_1$ of the micro-structure unit 2 may be set to 150 nm to 2 $\mu$m; and the arrangement period $|p_2|$ in the second dimension direction $p_2$ of the micro-structure unit 2 may be set to 150 nm to 2 $\mu$m. In a more preferred scheme, the arrangement period $|p_1|$ in the first dimension direction $p_1$ of the micro-structure unit 2 is not equal to the arrangement period $|p_2|$ in the second dimension direction $p_2$, that is, $|p_1| \neq |p_2|$.

In the diffraction grating provided according to the embodiment of the present application, a pattern formed by the orthographic projection of the micro-structure unit 2 on the substrate 1 comprises a first closed pattern. FIG. 2a to FIG. 2g respectively show the structural shapes of the micro-structure units 2 in some specific embodiments of the present application. As shown in FIG. 2a to FIG. 2g, the pattern formed by the orthographic projection of the micro-structure unit 2 on the substrate 1 comprises a first closed pattern 21, which is an asymmetric pattern, and the boundary of the first closed pattern 21 is formed by sequentially connecting three or more edges in a surrounding manner, and among the three or more edges, there is at least one straight-line edge which is neither parallel to the first dimension direction $p_1$ nor to the second dimension direction $p_2$.

Hereinafter, the micro-structure units 2 shown in FIG. 2a to FIG. 2g are taken as examples for specific description.

For example, for the structural shape of the micro-structure unit 2 shown in FIG. 2a, the boundary of the first closed pattern 21 is formed by sequentially connecting four edges $L_1$, $L_2$, $L_3$ and $L_4$ in a surrounding manner, and the four edges $L_1$, $L_2$, $L_3$ and $L_4$ include: straight-line edges $L_2$ and $L_4$ parallel to the first dimension direction $p_1$, a straight-line edge $L_3$ parallel to the second dimension direction $p_2$, and at least one straight-line edge $L_1$ that is neither parallel to the first dimension direction $p_1$ nor to the second dimension direction $p_2$.

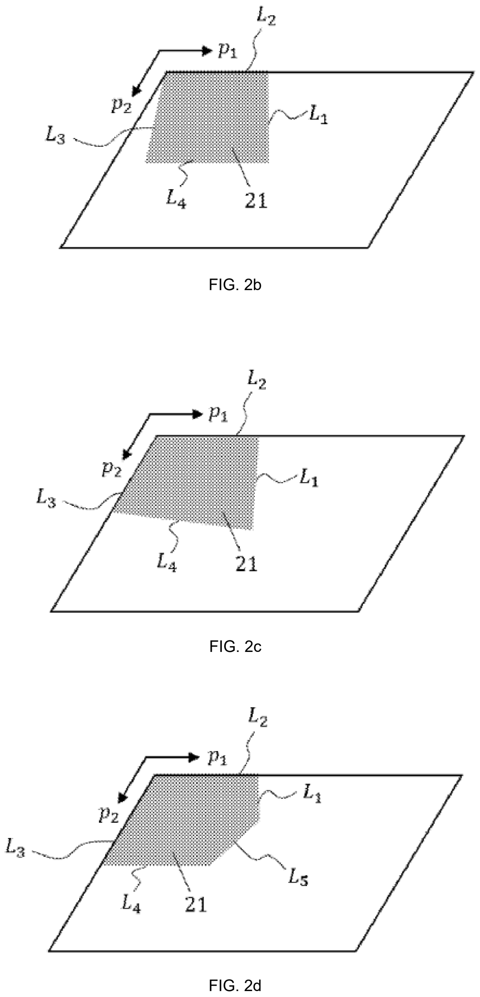

For example, for the structural shape of the micro-structure unit 2 shown in FIG. 2b, the boundary of the first closed pattern 21 is formed by sequentially connecting four edges $L_1$, $L_2$, $L_3$ and $L_4$ in a surrounding manner, and the four edges $L_1$, $L_2$, $L_3$ and $L_4$ include: straight-line edges $L_2$ and $L_4$ parallel to the first dimension direction $p_1$, and two straight-line edges $L_1$ and $L_3$ that are neither parallel to the first dimension direction $p_1$ nor to the second dimension direction $p_2$.

For example, for the structural shape of the micro-structure unit 2 shown in FIG. 2c, the boundary of the first closed pattern 21 is formed by sequentially connecting four edges $L_1$, $L_2$, $L_3$ and $L_4$ in a surrounding manner, and the four edges $L_1$, $L_2$, $L_3$ and $L_4$ include: a straight-line edge $L_2$ parallel to the first dimension direction $p_1$, a straight-line edge $L_3$ parallel to the second dimension direction $p_2$, and two straight-line edges $L_1$ and $L_4$ that are neither parallel to the first dimension direction $p_1$ nor to the second dimension direction $p_2$.

For example, for the structural shape of the micro-structure unit 2 shown in FIG. 2d, the boundary of the first closed pattern 21 is formed by sequentially connecting five edges $L_1$, $L_2$, $L_3$, $L_4$ and $L_5$ in a surrounding manner, and the five edges $L_1$, $L_2$, $L_3$, $L_4$ and $L_5$ include: straight-line edges $L_2$ and $L_4$ parallel to the first dimension direction $p_1$, a straight-line edge $L_3$ parallel to the second dimension direction $p_2$, and two straight-line edges $L_1$ and $L_5$ that are neither parallel to the first dimension direction $p_1$ nor to the second dimension direction $p_2$.

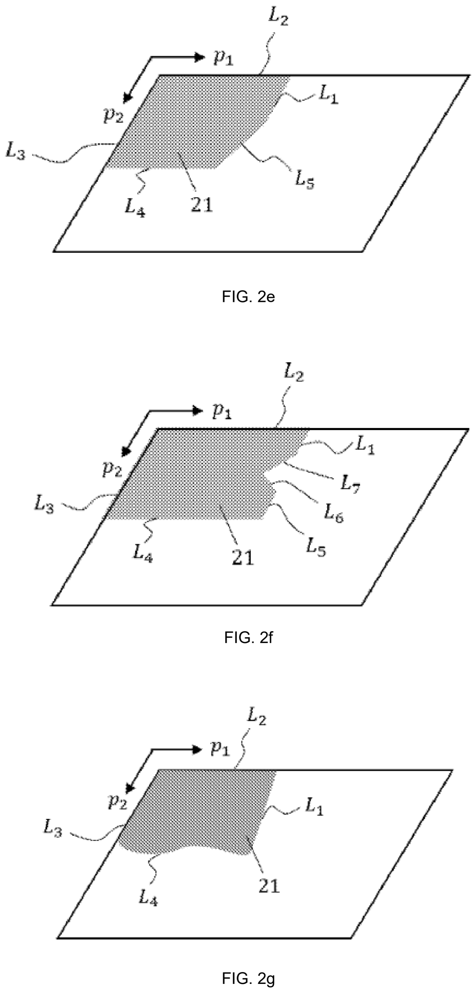

For example, for the structural shape of the micro-structure unit 2 shown in FIG. 2e, the boundary of the first closed pattern 21 is formed by sequentially connecting five edges $L_1$, $L_2$, $L_3$, $L_4$ and $L_5$ in a surrounding manner, and the five edges $L_1$, $L_2$, $L_3$, $L_4$ and $L_5$ include: straight-line edges $L_2$ and $L_4$ parallel to the first dimension direction $p_1$, straight-line edges $L_1$ and $L_3$ parallel to the second dimension direction $p_2$, and a straight-line edge $L_5$ that is neither parallel to the first dimension direction $p_1$ nor to the second dimension direction $p_2$.

For example, for the structural shape of the micro-structure unit 2 shown in FIG. 2f, the boundary of the first closed pattern 21 is formed by sequentially connecting seven edges $L_1$, $L_2$, $L_3$, $L_4$, $L_5$, $L_6$ and $L_7$ in a surrounding manner, and the seven edges $L_1$, $L_2$, $L_3$, $L_4$, $L_5$, $L_6$ and $L_7$ include: straight-line edges $L_2$ and $L_4$ parallel to the first dimension direction $p_1$, straight-line edges $L_1$, $L_3$ and $L_5$ parallel to the second dimension direction $p_2$, and two straight-line edges $L_6$ and $L_7$ that are neither parallel to the first dimension direction $p_1$ nor to the second dimension direction $p_2$.

For example, for the structural shape of the micro-structure unit 2 shown in FIG. 2g, the boundary of the first closed pattern 21 is formed by sequentially connecting four edges $L_1$, $L_2$, $L_3$ and $L_4$ in a surrounding manner, and the four edges $L_1$, $L_2$, $L_3$ and $L_4$ include: a straight-line edge $L_2$ parallel to the first dimension direction $p_1$, a straight-line edge $L_3$ parallel to the second dimension direction $p_2$, and a straight-line edge $L_1$ and a curved-line edge $L_4$ that are neither parallel to the first dimension direction $p_1$ nor to the second dimension direction $p_2$. As a preferred scheme, as shown in FIG. 2g, the curved-line edge $L_4$ is a wavy curved-line edge with at least one peak and at least one valley, so that the uniformity of pupil expansion in different directions of the diffraction grating can be effectively improved.

In the diffraction grating as described in the above embodiment, the micro-structure unit of the two-dimensional diffraction grating is an asymmetric structure, and among the edges constituting the boundary of the micro-structure unit of the two-dimensional diffraction grating, there is at least one straight-line edge which is not parallel to either of the two dimension directions periodically arranged. Consequently, the micro-structure unit has more adjustable parameters and rich degree of freedom for design, thereby facilitating the adjustment of coupling-out efficiency, and improving diffraction selectivity, diffraction efficiency and brightness of images watched by human eyes.

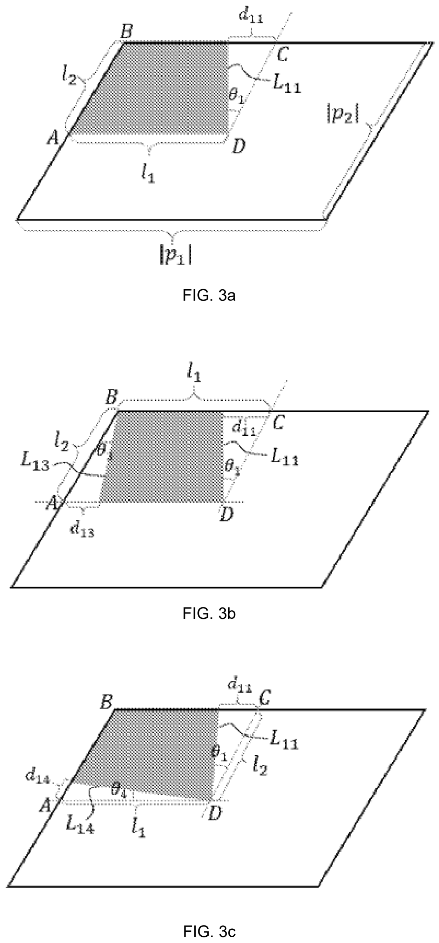

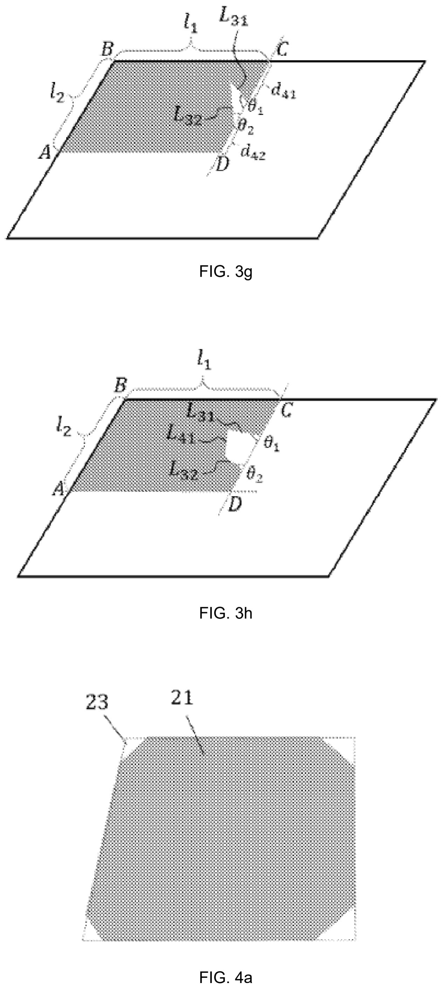

In one or more embodiments, referring to FIG. 3a to FIG. 3h, the straight-line edge neither parallel to the first dimension direction $p_1$ nor to the second dimension direction $p_2$ is a transformation edge, and an included angle formed by the intersection of the transformation edge with the first dimension direction $p_1$ or the second dimension direction $p_2$ and located outside the first closed pattern 21 is a transformation angle $\theta_i$, $i$=1, 2, 3, 4,......., i.e., $i$ is a positive integer. The transformation angle $\theta_i$ preferably ranges from 5° to 175°. For example, in the structures shown in FIG. 3a to FIG. 3f and FIG. 3h, the transformation angles $\theta_i$ are all acute angles. In the structure shown in FIG. 3g, one of the transformation angles $\theta_i$ (the transformation angle $\theta_2$ in FIG. 3g) is an acute angle and the other transformation angle $\theta_i$ (the transformation angle $\theta_1$ in FIG. 3g) is an obtuse angle. By adjusting the size of the transformation angles $\theta_i$, the extension direction of the corresponding transformation edge relative to the first dimension direction $p_1$ and the second dimension direction $p_2$ can be adjusted.

In a more preferred scheme, when the transformation angle $\theta_i$ is an acute angle, the range of the transformation angle $\theta_i$ is more preferably set to be 40° to 90°. When the transformation angle $\theta_i$ is an obtuse angle, the range of the transformation angle $\theta_i$ is more preferably set to be 90° to 140°.

Further speaking, referring to FIG. 3a to FIG. 3h, the maximum ridge width of the first closed pattern 21 in the first dimension direction $p_1$ is $l_1$, and the maximum ridge width of the first closed pattern 21 in the second dimension direction $p_2$ is $l_2$. A reference parallelogram ABCD is set up by taking the maximum ridge width $l_1$ and the maximum ridge width $l_2$ as two groups of opposite edges. That is, the reference parallelogram ABCD is: the smallest parallelogram which can surround the first closed pattern 21 that is formed by taking the maximum ridge width $l_1$ and the maximum ridge width $l_2$ as two groups of opposite edges in the first dimension direction $p_1$ and the second dimension direction $p_2$ in which the micro-structure units 2 are periodically arranged at intervals.

In one or more embodiments, the transformation edges in the first closed pattern 21 include a first-type straight-line edge $L_{1i}$ and/or a second-type straight-line edge $L_{2i}$ and/or a third-type straight-line edge $L_{3i}$ and/or a fourth-type straight-line edge $L_{4i}$, and i=1, 2, 3, 4,.......

Referring to FIG. 3a to FIG. 3c, a first endpoint of the first-type straight-line edge $L_{1i}$ is located on the vertex of the reference parallelogram ABCD, and a second endpoint of the first-type straight-line edge $L_{1i}$ is located on one of the edges of the reference parallelogram ABCD. Taking FIG. 3b as an example: a first endpoint of a first-type straight-line edge $L_{11}$ is located on the vertex D of the reference parallelogram ABCD, and a second endpoint thereof is located on one edge BC of the reference parallelogram ABCD that is not adjacent to the vertex D; a first endpoint of another first-type straight-line edge $L_{13}$ is located on the vertex B of the reference parallelogram ABCD, and a second endpoint thereof is located on one edge AD of the reference parallelogram ABCD which is not adjacent to the vertex B. In some other possible embodiments, the second endpoint of the first-type straight-line edge $L_{1i}$ is located on another vertex of the reference parallelogram ABCD, that is, the two endpoints of the first-type straight-line edge $L_{1i}$ are located on different vertices of the reference parallelogram ABCD.

Further speaking, referring to FIG. 3a to FIG. 3c, the distance $d_{1i}$ between the second endpoint of the first-type straight-line edge $L_{1i}$ located on one of the edges with an edge length of $l_{10}$ and the relatively closer endpoint of the one of the edges is $\frac{1}{10}l_{10} \leq d_{1i} \leq \frac{1}{2}l_{10}$; $l_{10}$ correspondingly takes the value of $l_1$ or $l_2$. Taking FIG. 3c as an example: the second endpoint of the first-type straight-line edge $L_{11}$ is located on the edge BC, the edge length of the edge BC is $l_1$, then $l_{10}$ correspondingly takes the value of $l_1$, and the distance $d_{11}$ between the second endpoint of the first-type straight-line edge $L_{1i}$ and the relatively closer endpoint C of the edge BC is preferably $\frac{1}{10}l_1 \leq d_{11} \leq \frac{1}{2}l_1$. The second endpoint of another first-type straight-line edge $L_{14}$ is located on one edge AB of the reference parallelogram ABCD, the edge length of the edge AB is $l_2$, then $l_{10}$ correspondingly takes the value of $l_2$, and the distance $d_{14}$ between the second endpoint of the first-type straight-line edge $L_{14}$ and the relatively closer endpoint A of the edge AB is preferably $\frac{1}{10}l_2 \leq d_{14} \leq \frac{1}{2}l_2$. In a more preferable scheme, the distance $d_{1i}$ is set to be $\frac{1}{4}l_{10} \leq d_{1i} \leq \frac{1}{2}l_{10}$. It shall be noted that, when the two endpoints of the first-type straight-line edge $L_{1i}$ are located on different vertices of the reference parallelogram ABCD, $d_{1i}$ =0.

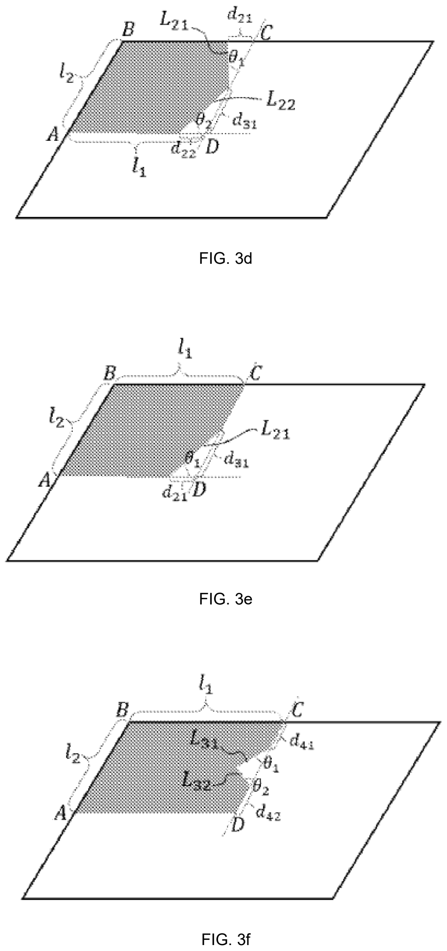

Referring to FIG. 3d and FIG. 3e, first and second endpoints of the second-type straight-line edge $L_{2i}$ are respectively located on two edges of the reference parallelogram ABCD in different directions. Taking FIG. 3d as an example: a first endpoint of the second-type straight-line edge $L_{21}$ is located on one edge BC of the reference parallelogram ABCD, and a second endpoint thereof is located on another edge CD of the reference parallelogram ABCD; a first endpoint of the second-type straight-line edge $L_{22}$ is located on one edge AD of the reference parallelogram ABCD, and a second endpoint thereof is located on another edge CD of the reference parallelogram ABCD.

Further speaking, referring to FIG. 3d and FIG. 3e, the distance $d_{2i}$ between the first endpoint of the second-type straight-line edge $L_{2i}$ located on one of the edges with an edge length of $l_{20}$ and the relatively closer endpoint of the one of the edges is preferably $\frac{1}{10}l_{20} \leq d_{2i} \leq \frac{1}{2}l_{20}$. The distance $d_{3i}$ between the second endpoint of the second-type straight-line edge $L_{2i}$ located on another edge with an edge length of $l_{30}$ and the relatively closer endpoint of the another edge is preferably $\frac{1}{10}l_{30} \leq d_{3i} \leq \frac{1}{2}l_{30}$. When $l_{20}$ correspondingly takes the value of $l_1$, $l_{30}$ correspondingly takes the value of $l_2$; and when $l_{20}$ correspondingly takes the value of $l_2$, $l_{30}$ correspondingly takes the value of $l_1$. Taking FIG. 3e as an example: the first endpoint of the second-type straight-line edge $L_{21}$ is located on the edge AD, the second endpoint thereof is located on another edge *CD*, the edge length of the edge *AD* is $l_1$, then $l_{20}$ correspondingly takes the value of $l_1$, and the edge length of the edge *CD* is $l_2$, then $l_{30}$ correspondingly takes the value of $l_2$. At this point, the distance $d_{21}$ between the first endpoint of the second-type straight-line edge $L_{21}$ and the relatively closer endpoint *D* of the edge *AD* is preferably $\frac{1}{10}l_1 \leq d_{21} \leq \frac{1}{2}l_1$, and the distance $d_{31}$ between the second endpoint of the second-type straight-line edge $L_{21}$ and the relatively closer endpoint D of the edge *CD* is preferably $\frac{1}{10}l_2 \leq d_{31} \leq \frac{1}{2}l_2$. It shall be noted that, the second endpoints of two second-type straight-line edges ($L_{21}$ and $L_{22}$) in FIG. 3d coincide, so the distances ($d_{31}$ and $d_{32}$) are the same, and in FIG. 3d, only $d_{31}$ is marked. In a more preferred scheme, the distance $d_{2i}$ is set to be $\frac{1}{4}l_{20} \leq d_{2i} \leq \frac{1}{2}l_{20}$, and the distance $d_{3i}$ is set to be $\frac{1}{4}l_{30} \leq d_{3i} \leq \frac{1}{2}l_{30}$.

Referring to FIG. 3f to FIG. 3h, a first endpoint of the third-type straight-line edge $L_{3i}$ is located on one of the edges or on the vertex of the reference parallelogram *ABCD*, and a second endpoint of the third-type straight-line edge $L_{3i}$ is located inside the reference parallelogram *ABCD*. Taking FIG. 3f as an example: a first endpoint of the third-type straight-line edge $L_{31}$ is located on one edge *CD* of the reference parallelogram *ABCD*, and a second endpoint thereof is located inside the reference parallelogram *ABCD*; a first endpoint of the third-type straight-line edge $L_{32}$ is located on one edge *CD* of the reference parallelogram *ABCD*, and a second endpoint thereof is located inside the reference parallelogram *ABCD*.

Further speaking, referring to FIG. 3f and FIG. 3g, the distance $d_{4i}$ between the first endpoint of the third-type straight-line edge $L_{3i}$ located on one of the edges with an edge length of $l_{40}$ and the relatively closer endpoint of the one of the edges is $\frac{1}{10}l_{40} \leq d_{4i} \leq \frac{1}{2}l_{40}$; and $l_{40}$ correspondingly takes the value of $l_1$ or $l_2$. Taking FIG. 3f as an example: the first endpoint of the third-type straight-line edge $L_{31}$ is located on the edge *CD*, the edge length of the edge *CD* is $l_2$, then $l_{40}$ correspondingly takes the value of $l_2$, and the distance $d_{41}$ between the first endpoint of the third-type straight-line edge $L_{31}$ and the relatively closer endpoint *C* of the edge *CD* is preferably $\frac{1}{10}l_2 \leq d_{41} \leq \frac{1}{2}l_2$. The first endpoint of the third-type straight-line edge $L_{32}$ is also located on the edge CD, and similarly, $l_{40}$ correspondingly takes the value of $l_2$, and the distance $d_{42}$ between the first endpoint of the third-type straight-line edge $L_{32}$ and the relatively closer endpoint D of the edge *CD* is preferably $\frac{1}{10}l_2 \leq d_{42} \leq \frac{1}{2}l_2$. In a more preferred scheme, the distance $d_{4i}$ is set to be $\frac{1}{4}l_{40} \leq d_{4i} \leq \frac{1}{2}l_{40}$. It shall be noted that, when there are two said third-type straight-line edges $L_{3i}$, and the first endpoints of the two third-type straight-line edges $L_{3i}$ are located on the same edge, the corresponding distance $d_{4i}$ of the two third-type straight-line edges $L_{3i}$ cannot be half the length of the corresponding edge at the same time. When the first endpoint of the third-type straight-line edge $L_{3i}$ is located on the vertex of the reference parallelogram *ABCD*, $d_{4i}$=0.

In some embodiments, referring to FIG. 3a to FIG. 3f, the transformation angle $\theta_i$ is an acute angle. In some other embodiments, referring to FIG. 3g, the transformation angle $\theta_2$ is an acute angle and the transformation angle $\theta_1$ is an obtuse angle.

Referring to FIG. 3h, both the first endpoint and the second endpoint of the fourth-type straight-line edge $L_{4i}$ are located inside the reference parallelogram *ABCD*, such as the fourth-type straight-line edge $L_{41}$ in FIG. 3h.

In the structure shown in FIG. 3a to FIG. 3h, the transformation edges in the first closed pattern 21 shown in FIG. 3a to FIG. 3c only include the first-type straight-line edge $L_{1i}$; the transformation edges in the first closed pattern 21 shown in FIG. 3d and FIG. 3e only include the second-type straight-line edge $L_{2i}$; the transformation edges in the first closed pattern 21 shown in FIG. 3f and FIG. 3g only include the third-type straight-line edge $L_{3i}$, and the transformation edge in the first closed pattern 21 shown in FIG. 3h includes the third-type straight-line edge $L_{3i}$ and the fourth-type straight-line edge $L_{4i}$.

Based on the above structural pattern, some shape changes that are easy to be contemplated are as follows: for example, if the edge AB in FIG. 3d is set to be the first-type straight-line edge $L_{13}$ in the structure of FIG. 3b, then the transformation edges in the first closed pattern 21 include the first-type straight-line edge $L_{1i}$ and the second-type straight-line edge $L_{2i}$. For example, if the edge *AB* in FIG. 3f is set to be the first-type straight-line edge $L_{13}$ in the structure of FIG. 3b, then the transformation edges in the first closed pattern 21 include the first-type straight-line edge $L_{1i}$ and the third-type straight-line edge $L_{3i}$. For example, if the edge *AB* in FIG. 3h is set to be the first-type straight-line edge $L_{13}$ in the structure of FIG. 3b, then the transformation edges in the first closed pattern 21 includes the first-type straight-line edge $L_{1i}$, the third-type straight-line edge $L_{3i}$ and the fourth-type straight-line edge $L_{4i}$.

In one or more embodiments, referring to FIG. 3h, the transformation edges in the first closed pattern 21 include two said third-type straight-line edges $L_{31}$ and $L_{32}$, and two second endpoints of the two third-type straight-line edges $L_{31}$ and $L_{32}$ located inside the reference parallelogram *ABCD* are connected with each other by one said fourth-type straight-line edge $L_{41}$. In some other embodiments, two second endpoints of the two third-type straight-line edges $L_{31}$ and $L_{32}$ may also be connected with each other through more fourth-type transformation edges $L_{4i}$, and/or curved-line edges and/or straight-line edges parallel to the first dimension direction $p_1$ or the second dimension direction $p_2$.

Referring to FIG. 3a to FIG. 3h, in the diffraction grating provided according to the embodiments of the present application, adjustable parameters of the micro-structure unit 2 include: (1) the duty ratio $l_1/|p_1|$ and $l_2/|p_2|$ of the micro-structure unit 2 in the two dimension directions periodically arranged; (2) the number of edges that are neither parallel to the first dimension direction $p_1$ nor to the second dimension direction $p_2$; (3) the size of the transformation angle $\theta_i$ for the transformation edge; (4) the position of the transformation edge (the position of the two endpoints); (5) the combination of different types of transformation edges and curved-line edges. As can be seen, the micro-structure unit 2 has more adjustable parameters and rich degree of freedom for design.

In a further preferred scheme, taking the micro-structure unit 2 shown in FIG. 3c as an example, when there are two or more said transformation edges, the transformation angles $\theta_i$ corresponding to the two or more transformation edges are not equal to each other.

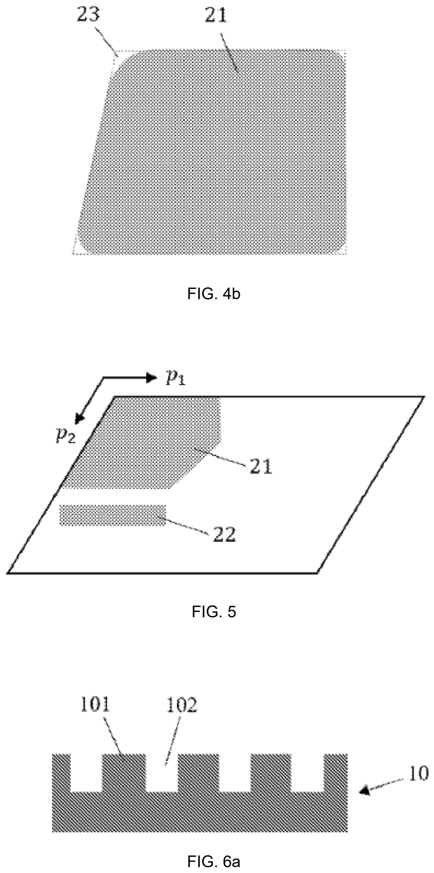

In the preferred scheme, referring to FIG. 4a and FIG. 4b, the first closed pattern 21 has a vertex 23, and the vertex 23 is formed into a straight chamfer (as shown in FIG. 4a) or a circular chamfer (as shown in FIG. 4b). By providing the straight chamfer or the circular chamfer, the number of small inner angles to be machined in the micro-structure can be reduced, which can reduce the processing difficulty, improve the yield, reduce the scattering and improve the image contrast of the process. The chamfering edge length of the straight chamfer is less than half of the length of the shortest straight-line edge among the three or more edges, and it usually ranges from 1 nm to 500 nm. The radius of curvature of the circular chamfer is less than half of the length of the shortest straight-line edge among the three or more edges, and it usually ranges from 1 nm to 500 nm.

FIG. 5 shows the structural shape of the micro-structure unit 2 in some other specific embodiments of the present application. In some other specific embodiments, the pattern formed by the orthographic projection of the micro-structure unit 2 on the substrate 1 may further include a second closed pattern 22 in addition to the first closed pattern 21 as described above. The boundary of the second closed pattern 22 may be a pattern of any shape, and may be a pattern enclosed by one or more straight-line segments and/or one or more curved-line segments. For example, the pattern may be circular, elliptical, fan-shaped, annular or polygonal. Generally, the area of the second closed pattern 22 is smaller than that of the first closed pattern 21. As shown in FIG. 5, the second closed pattern 22 is rectangular.

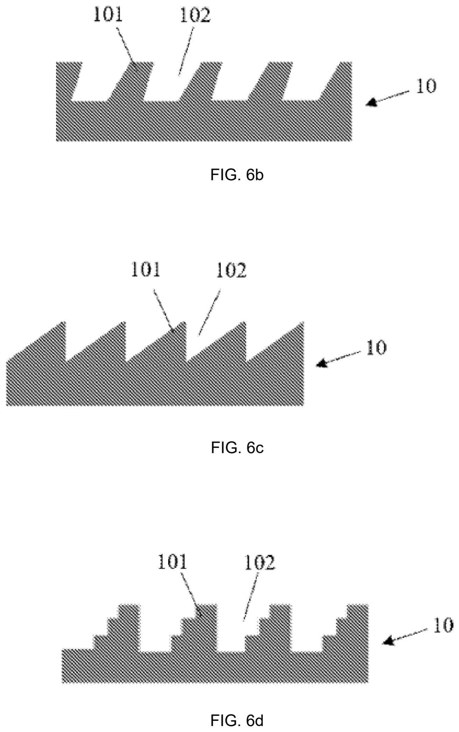

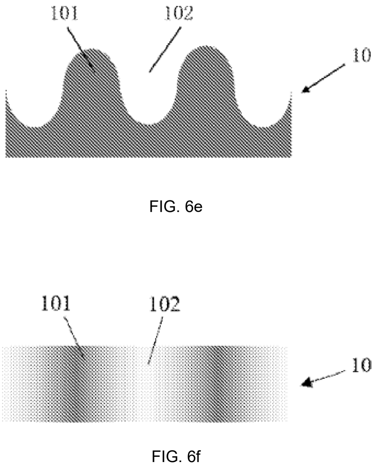

In the embodiment of the present application, the diffraction grating 10 as described above may be realized in the form of a surface relief grating or a volume holographic grating. Specifically, the thickness of the grating is between 10 nm and 2 $\mu$m. FIG. 6a to FIG. 6f show cross-sectional views of diffraction gratings in some specific embodiments of the present application. FIG. 6a is the structural diagram of a relief grating with straight groove envelope, FIG. 6b is the structural diagram of a relief grating with slanted tooth envelope, FIG. 6c is the structural diagram of a relief grating with blazed envelope, FIG. 6d is the structural diagram of a relief grating with step envelope, FIG. 6e is the structural diagram of a relief grating with curved-surface envelope, and FIG. 6f is the structural diagram of a volume holographic grating.

In the embodiment of the present application, the diffraction grating 10 is composed of at least two optical materials with different optical characteristics, including refractive index, and/or absorption characteristics and/or birefringence characteristics. Therefore, if the grating is in air, then air is also considered as an optical material. For materials without birefringence, the optical characteristics of the materials can be comprehensively described by refractive index and absorption characteristics. When the difference between the two optical materials mainly lies in the refractive index, the grating may be divided into a high refractive-index portion and a low refractive-index portion. Referring to FIG. 6a to FIG. 6f, the diffraction grating 10 comprises a high refractive-index portion 101 and a low refractive-index portion 102. It is worth noting that, the diagram may also be used to distinguish two optical materials with different absorption characteristics and/or different birefringence characteristics.

For the surface relief grating, the area of the micro-structure unit 2 is preferably formed at half the grating thickness, and in some specific schemes, the area of the micro-structure unit 2 in the diffraction grating 10 is provided as the high refractive-index portion, and other areas surrounding the area of the micro-structure unit 2 are disposed as the low refractive-index portions 102. The refractive index of the high refractive-index portion 101 is between 1.5 and 3.0, and the refractive index of the low refractive-index portion 102 is between 1.0 and 1.5. In some other specific schemes, the area of the micro-structure unit 2 in the diffraction grating 10 is provided as the low refractive index portion 102, and other areas surrounding the area of the micro-structure unit 2 are provided as the high refractive-index portions 101.

For a volume holographic grating with refractive index gradient, the area of the micro-structure unit 2 preferably corresponds to half the thickness of the grating. Taking the contour corresponding to the average refractive index of the optical materials as the boundary, the portion with a refractive index greater than the average refractive index is defined as a the high refractive-index portion, and the part with a refractive index less than the average refractive index is defined as the low refractive-index portion. The area of the micro-structure unit 2 is a portion surrounded by the contour corresponding to the average refractive index of the optical materials, and it may be provided as the high refractive-index portion or the low refractive-index portion.

Based on the diffraction grating provided in the above embodiments, an embodiment of the present application further provides an optical waveguide apparatus, which comprises a base, and a coupling-in grating and a coupling-out grating arranged on the base, wherein the coupling-in grating is configured to couple an external light beam into the base, and the coupling-out grating is configured to couple the light beam out of the base. In a further embodiment, the optical waveguide apparatus may further comprise an intermediate grating. The diffraction grating provided according to the embodiment of the present application is used in part or all areas of the coupling-in grating and/or the coupling-out grating and/or the intermediate grating. It shall be noted that when the diffraction grating provided according to the embodiment of the present application is applied to an optical waveguide apparatus, the base of the optical waveguide apparatus can be directly reused as the substrate of the diffraction grating, that is, the base of the optical waveguide apparatus and the substrate of the diffraction grating are integrated.

In an optional scheme, in the optical waveguide apparatus, there are one or more layers of coating on the side of the diffraction grating close to and/or far from the human eyes, and there are one or more layers of coating on the grating-free side of the base. Further speaking, the base may be a multilayer structure, and the diffraction grating may be a multilayer structure.

Further speaking, the present application further provides a display device, such as an augmented reality (AR) display device or a mixed reality (MR) display device. The display device comprises a projection device and the optical waveguide apparatus provided in the above embodiment of the present application. The projection device is configured to generate image light (light carrying image information), and the image light is coupled into the base by the coupling-in grating, transmitted to the coupling-out grating via the base, and then coupled out of the base by the coupling-out grating, and transmitted to human eyes, so that the human eyes can observe the corresponding image information.

According to the above description, for the diffraction grating, the optical waveguide apparatus and the display device provided according to the above embodiments of the present application, the micro-structure unit of the two-dimensional diffraction grating is an asymmetric structure, and among the edges constituting the boundary of the micro-structure unit of the two-dimensional diffraction grating, there is at least one straight-line edge which is not parallel to either of the two dimension directions periodically arranged. Consequently, the micro-structure unit has more adjustable parameters and rich degree of freedom for design, thereby facilitating the adjustment of coupling-out efficiency, and improving diffraction selectivity, diffraction efficiency and brightness of images watched by human eyes.

Although the present application has been shown and described with reference to specific embodiments, it shall be understood by those skilled in the art that various changes in forms and details may be made herein without departing from the spirit and scope of the present application as defined by the claims and equivalents thereof.

**Claims**

1. A diffraction grating, comprising:

   a substrate;
   a plurality of micro-structure units formed on the substrate and periodically arranged at intervals in a first dimension direction and a second dimension direction, a pattern formed by the orthographic projections of the micro-structure units on the substrate comprises a first closed pattern, wherein
   the first closed pattern is an asymmetric pattern, the boundary of the first closed pattern is formed by sequentially connecting three or more edges in a surrounding manner, and among the three or more edges, there is at least one straight-line edge, which is neither parallel to the first dimension direction nor to the second dimension direction.

2. The diffraction grating according to Claim 1, wherein the straight-line edge neither parallel to the first dimension direction nor to the second dimension direction is a transformation edge, an included angle formed by the intersection of the transformation edge with the first dimension direction or the second dimension direction and located outside the first closed pattern is a transformation angle $\theta_i$, and the transformation angle $\theta_i$ ranges from 5° to 175°.

3. The diffraction grating according to Claim 2, wherein the transformation edge in the first closed pattern includes at least one of a first-type straight-line edge, a second-type straight-line edge, a third-type straight-line edge and a fourth-type straight-line edge; wherein

   a reference parallelogram is set up by taking the maximum ridge width $l_1$ of the first closed pattern in the first dimension direction and the maximum ridge width $l_2$ of the first closed pattern in the second dimension direction as two groups of opposite edges;
   a first endpoint of the first-type straight-line edge is located on the vertex of the reference parallelogram, a second endpoint of the first-type straight-line edge is located on one edge of the reference parallelogram that is not adjacent to the first endpoint or on another vertex of the reference parallelogram that is not adjacent to the first endpoint;

a first endpoint and a second endpoint of the second-type straight-line edge are respectively located on two edges of the reference parallelogram in different directions;

a first endpoint of the third-type straight-line edge is located on one of the edges or on the vertex of the reference parallelogram, and a second endpoint of the third-type straight-line edge is located inside the reference parallelogram; and

a first endpoint and a second endpoint of the fourth-type straight-line edge are both located inside the reference parallelogram.

4. The diffraction grating according to Claim 3, wherein the distance $d_{1i}$ between the second endpoint of the first-type straight-line edge located on one of the edges with an edge length of $l_{10}$ and the relatively closer endpoint of the one of the edges is $\frac{1}{10}l_{10} \leq d_{1i} \leq \frac{1}{2}l_{10}$ ; $l_{10}$ correspondingly takes the value of $l_1$ or $l_2$;

the distance $d_{2i}$ between the first endpoint of the second-type straight-line edge located on one of the edges with an edge length of $l_{20}$ and the relatively closer endpoint of the one of the edges is $\frac{1}{10}l_{20} \leq d_{2i} \leq \frac{1}{2}l_{20}$ ; the distance $d_{3i}$ between the second endpoint of the second-type straight-line edge located on another edge with an edge length of $l_{30}$ and the relatively closer endpoint of the another edge is $\frac{1}{10}l_{30} \leq d_{3i} \leq \frac{1}{2}l_{30}$ ; $l_{30}$ correspondingly takes the value of $l_2$ when $l_{20}$ correspondingly takes the value of $l_1$, and $l_{30}$ correspondingly takes the value of $l_1$ when $l_{20}$ correspondingly takes the value of $l_2$;

the distance $d_{4i}$ between the first endpoint of the third-type straight-line edge located on one of the edges with an edge length of $l_{40}$ and the relatively closer endpoint of the one of the edges is $\frac{1}{10}l_{40} \leq d_{4i} \leq \frac{1}{2}l_{40}$ ; and $l_{40}$ correspondingly takes the value of $l_1$ or $l_2$.

5. The diffraction grating according to Claim 3, wherein the transformation edge in the first closed pattern includes two said third-type straight-line edges, and two second endpoints of the two third-type straight-line edges located inside the reference parallelogram are connected with each other by at least one of one or more said fourth-type transformation edges and one curved-line edge and a straight-line edge parallel to the first dimension direction or the second dimension direction.

6. The diffraction grating according to Claim 2, wherein among the three or more edges, there are at least two or more said transformation edges, and the two or more transformation edges correspond to transformation angles which are not equal to each other.

7. The diffraction grating according to Claim 1, wherein the first closed pattern has at least one curved-line edge.

8. The diffraction grating according to Claim 1, wherein the pattern formed by the orthographic projections of the micro-structure units on the substrate further includes a second closed pattern of an arbitrary shape.

9. The diffraction grating according to any of Claims 1 to 8, wherein in the first dimension direction and the second dimension direction in which the micro-structure units are periodically arranged, in a parallelogram formed by taking two arrangement periods as two groups of opposite edges, the angle of the relatively smaller inner angle is 30° to 85°.

10. The diffraction grating according to Claim 1, wherein both the arrangement period of the micro-structure units in the first dimension direction and the arrangement period of the micro-structure units in the second dimension direction range from 150 nm to 2 μm.

11. The diffraction grating according to Claim 10, wherein the arrangement period of the micro-structure units in the first dimension direction and the arrangement period of the micro-structure units in the second dimension direction are not equal.

12. The diffraction grating according to Claim 1, wherein the diffraction grating is a surface relief grating or a volume holographic grating, and the thickness of the diffraction grating ranges from 10 nm to 2 μm.

13. The diffraction grating according to Claim 12, wherein the diffraction grating comprises at least two optical material components with different optical characteristics, and the optical characteristics include at least one of refractive index, absorption characteristics and birefringence characteristics.

14. The diffraction grating according to Claim 13, wherein for the surface relief grating, the micro-structure unit area is formed at half the grating thickness, the micro-structure unit area in the diffraction grating is provided as a high refractive-index portion, and other areas surrounding the micro-structure unit area are provided as low refractive-index portions; alternatively, the micro-structure unit area in the diffraction grating is provided as a low refractive-index portion, and other areas surrounding the micro-structure unit area are provided as high refractive-index portions; for a volume holographic grating with a refractive index gradient, the micro-structure unit area corresponds to half of the grating thickness, and the micro-structure unit area is the portion surrounded by the contour corresponding to the average refractive index of optical materials.

15. An optical waveguide apparatus, comprising:

a base;
the base being provided with at least one of a coupling-in grating, a coupling-out grating and an intermediate grating; wherein
at least one of the coupling-in grating, the coupling-out grating and the intermediate grating adopts the diffraction grating according to any of Claims 1 to 14 in some areas.

16. The optical waveguide apparatus according to Claim 15, wherein there are one or more layers of coating on the side of the diffraction grating close to or far from the human eyes, and there are one or more layers of coating on the grating-free side of the base.

17. A display device, comprising the optical waveguide apparatus according to any of Claims 15 to 16.

FIG. 1

FIG. 2a

FIG. 2b

FIG. 2c

FIG. 2d

FIG. 2e

FIG. 2f

FIG. 2g

FIG. 3a

FIG. 3b

FIG. 3c

FIG. 3d

FIG. 3e

FIG. 3f

FIG. 3g

FIG. 3h

FIG. 4a

FIG. 4b

FIG. 5

FIG. 6a

FIG. 6b

FIG. 6c

FIG. 6d

FIG. 6e

FIG. 6f

## INTERNATIONAL SEARCH REPORT

| International application No. |
| --- |
| **PCT/CN2024/081929** |

| A. | CLASSIFICATION OF SUBJECT MATTER |
| --- | --- |

G02B5/18(2006.01)i;  G02B6/00(2006.01)i;  G02B27/00(2006.01)i

According to International Patent Classification (IPC) or to both national classification and IPC

| B. | FIELDS SEARCHED |
| --- | --- |

Minimum documentation searched (classification system followed by classification symbols)

IPC: G02B5、G02B6、G02B27

Documentation searched other than minimum documentation to the extent that such documents are included in the fields searched

Electronic data base consulted during the international search (name of data base and, where practicable, search terms used)

CNTXT, CNABS, ENTXTC, DWPI, VEN, CJFD: 衍射, 光栅, 二维, 微结构, 非对称, 不规则, 耦入, 耦出, diffract+, grating, two 1w dimension+, coupl+, asymmetr+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116609870 A (ZHUHAI MOJIE TECHNOLOGY CO., LTD.) 18 August 2023 (2023-08-18)<br>claims 1-17 | 1-17 |
| X | CN 113495319 A (GUANGDONG OPPO MOBILE COMMUNICATIONS CO., LTD.) 12 October 2021 (2021-10-12)<br>description, paragraphs 48-121, and figures 1-20 | 1-17 |
| X | CN 217879706 U (HANGZHOU HIKVISION DIGITAL TECHNOLOGY CO., LTD.) 22 November 2022 (2022-11-22)<br>description, paragraphs 39-96, and figures 1-15 | 1-17 |
| X | CN 217902099 U (SHUNYU AOLAI SEMICONDUCTOR PHOTOELECTRIC (SHANGHAI) CO., LTD.) 25 November 2022 (2022-11-25)<br>description, paragraphs 34-56, and figures 1-9 | 1-17 |
| A | CN 218003765 U (IRAY TECHNOLOGY CO., LTD.) 09 December 2022 (2022-12-09)<br>entire document | 1-17 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 July 2024** | **09 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/081929** |

**C.    DOCUMENTS CONSIDERED TO BE RELEVANT**

| Category* | Citation of document, with indication, where appropriate, of the relevant passages | Relevant to claim No. |
|---|---|---|
| A | US 2017102544 A1 (MICROSOFT TECHNOLOGY LICENSING LLC.) 13 April 2017 (2017-04-13) <br> entire document | 1-17 |

Form PCT/ISA/210 (second sheet) (July 2022)

**INTERNATIONAL SEARCH REPORT**
Information on patent family members

International application No.

**PCT/CN2024/081929**

| Patent document cited in search report | | | Publication date (day/month/year) | Patent family member(s) | | | Publication date (day/month/year) |
|---|---|---|---|---|---|---|---|
| CN | 116609870 | A | 18 August 2023 | None | | | |
| CN | 113495319 | A | 12 October 2021 | None | | | |
| CN | 217879706 | U | 22 November 2022 | None | | | |
| CN | 217902099 | U | 25 November 2022 | None | | | |
| CN | 218003765 | U | 09 December 2022 | None | | | |
| US | 2017102544 | A1 | 13 April 2017 | US | 10241332 | B2 | 26 March 2019 |
| | | | | WO | 2017062167 | A1 | 13 April 2017 |

Form PCT/ISA/210 (patent family annex) (July 2022)